(19) Europäisches Patentamt / European Patent Office / Office européen des brevets

(11) **EP 1 659 389 B1**

(12) **EUROPÄISCHE PATENTSCHRIFT**

(45) Veröffentlichungstag und Bekanntmachung des Hinweises auf die Patenterteilung:
**26.06.2013 Patentblatt 2013/26**

(51) Int Cl.:
*G01N 9/00* (2006.01)     *G01F 1/84* (2006.01)

(21) Anmeldenummer: **05019496.8**

(22) Anmeldetag: **07.09.2005**

(54) **Verfahren zum Betreiben eines Coriolis-Massendurchflussmeßgeräts zur Dichtemessung**

Method of operating a Coriolis mass flow meter for measuring density

Procédé de fonctionnement d'un débitmètre massique de Coriolis pour mesurer la densité

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **29.10.2004 DE 102004053010**
**22.11.2004 DE 102004056235**

(43) Veröffentlichungstag der Anmeldung:
**24.05.2006 Patentblatt 2006/21**

(73) Patentinhaber: **Krohne AG**
**4019 Basel (CH)**

(72) Erfinder:
• **Kolahi, Kourosh**
**24118 Kiel (DE)**
• **Schröder, Thorsten**
**24113 Kiel (DE)**
• **Storm, Ralf**
**45131 Essen (DE)**

(74) Vertreter: **Gesthuysen Patent- und Rechtsanwälte**
**Patentanwälte**
**Postfach 10 13 54**
**45013 Essen (DE)**

(56) Entgegenhaltungen:
WO-A-00/71979     DE-A1- 10 002 635
US-A- 5 576 500

**Beschreibung**

Die Erfindung betrifft ein Verfahren zum Betreiben eines Massendurchflußmeßgeräts, das nach dem Coriolis-Prinzip arbeitet, wobei das Massendurchflußmeßgerät ein von einem Medium durchströmtes Meßrohr aufweist, das Meßrohr mit wenigstens zwei voneinander verschiedenen Frequenzen oder/und in wenigstens zwei voneinander verschiedenen Eigenformen zu Schwingungen angeregt wird und die resultierenden Schwingungen des Meßrohrs erfaßt werden.

Ein derartiges Verfahren ist z. B. aus der DE 100 02 635 A1 bekannt. Dort ist beschrieben, das Meßrohr in drei voneinander unabhängigen Schwingungsformen anzuregen und mittels des erfaßten Antwortverhaltens der Schwingungen des Meßrohrs charakteristische Größen des Massendurchflußmeßgeräts, wie den Nullpunkt und die Empfindlichkeit des Massendurchflußmeßgeräts, mit Hilfe eines mathematisch-physikalischen Modells während des Betriebs des Massendurchflußmeßgeräts in Echtzeit zu bestimmen.

Die Bestimmung der charakteristischen Größen "Nullpunkt" und "Empfindlichkeit" im Betrieb des Massendurchflußmeßgeräts dienen im wesentlichen der Verbesserung der Meßgenauigkeit der Massendurchflußmessung. Mit einem Coriolis-Massendurchflußmeßgerät ist jedoch grundsätzlich auch eine Dichtemessung des durch das Meßrohr strömenden Mediums möglich. Bei herkömmlichen Coriolis-Massendurchflußmeßgeräten ist dies häufig dadurch realisiert, daß die Dichte des strömenden Mediums über die Eigenfrequenz der ersten Eigenform des schwingenden, von dem Medium durchströmten Meßrohrs bestimmt wird, wobei teilweise eine Korrektur mittels Temperatur- und/oder Spannungswerten erfolgt, die mit Hilfe von am Meßrohr oder/und an einem gegebenenfalls vorgesehenen Tragrohr angeordneten Temperatursensoren bzw. Dehnungssensoren erfaßt werden. Es hat sich jedoch gezeigt, daß die auf diese Weise ermittelte Dichte des durch das Meßrohr strömenden Mediums, die über die Eigenfrequenz, im folgenden auch Resonanzfrequenz genannt, bestimmt worden ist, häufig eine nur unzureichende Genauigkeit aufweist.

Weiterhin ist aus der WO 00/71979 A1 oder der US 5 576500 bekannt daß die Dichte des durch das Meßrohr strömenden Mediums bestimmt wird, indem die erfaßten Schwingungen des Meßrohrs auf der Grundlage eines physikalisch-mathematischen. Modells für die Dynamik des Massendurchflußmeßgeräts ausgewertet werden.

Damit ist es die Aufgabe der Erfindung ein derartiges Verfahren zum Betreiben eines Massendurchflußmeßgeräts anzugeben, mit dem die Dichte des durch das Meßrohr strömenden Mediums mit hoher Genauigkeit bestimmt werden kann.

Es wird also die Schwingungsantwort des Meßrohrs auf die Anregung desselben in den wenigstens zwei voneinander verschiedenen Frequenzen oder/und in den wenigstens zwei voneinander verschiedenen Eigenformen erfaßt, um im Rahmen eines physikalisch-mathematischen Modells für die Dynamik, also das Schwingungsverhalten, des Massendurchflußmeßgeräts, auf die Dichte des durch das Meßrohr strömenden Mediums rückschließen zu können.

Des erfindungsgemäße Verfahren umfasst zusätzlich die im kennzeichnenden Teil des Anspruchs 1 definierten Merkmale.

Dabei soll das physikalisch-mathematische Modell für die Dynamik des Massendurchflußmeßgeräts wenigstens die Dynamik des schwingenden Meßrohrs umfassen, kann jedoch auch weitere Einrichtungen des Massendurchflußmeßgeräts berücksichtigen. Dementsprechend ist gemäß einer bevorzugten Weiterbildung der Erfindung vorgesehen, daß das physikalisch-mathematische Modell zur Bestimmung der Dichte außer der Dynamik des Meßrohrs auch den Einfluß wenigstens einer weiteren Einrichtung des Massendurchflußmeßgeräts, wie einem Tragrohr oder/und einer Aufhängung des Meßrohrs des Massendurchflußmeßgeräts, berücksichtigt, Dabei gilt, daß die Berücksichtigung zusätzlicher Einrichtungen des Massendurchflußmeßgeräts für das physikalisch-mathematische Modell für die Dynamik des Massendurchflußmeßgeräts immer eine bessere Abbildung des tatsächlichen Geräts bedeutet, wobei jedoch damit aufgrund des komplizierteren Modells ein höherer Verarbeitungsaufwand verbunden ist Grundsätzlich können unterschiedliche physikalisch-mathematische Modelle für die vorliegende Erfindung verwendet werden. Es ist jedoch ein physikalisch-mathematisches Modell wenigstens 2. Ordnung für die Dynamik des Massendurchflußmeßgeräts vorgesehen, z. B. entsprechend oder ähnlich zu dem aus der eingangs genannten DE 100 02 635 Al bekannten. Dabei soll gemäß einer bevorzugten Weiterbildung der Erfindung insbesondere auch gewährleistet sein, daß das physikalisch-mathematische Modell zur Beschreibung der Schwingungen des Massendurchflußmeßgeräts bei Anregung des Meßrohrs in seiner ersten Eigenform und/oder in seiner zweiten Eigenform geeignet ist. Im übrigen kann gemäß einer bevorzugten Weiterbildung der Erfindung vorgesehen sein, daß das physikalisch-mathematische Modell zur Bestimmung der Dichte die Kopplung zwischen der ersten Eigenform und der zweiten Eigenform der Schwingungen des Meßrohrs berücksichtigt. Gemäß einer weiteren bevorzugten Weiterbildung der Erfindung berücksichtigt das physikalisch-mathematische Modell auch die dritte Eigenform und deren Kopplungen mit den anderen niedrigeren Eigenformen.

Wie weiter oben schon ausgeführt worden ist, führt die alleinige Betrachtung der Eigenfrequenz des Meßrohrs zur Bestimmung der Dichte des durch das Meßrohr strömenden Mediums zu einer erheblichen Meßunsicherheit. Im Rahmen der Erfindung ist nun festgestellt worden, daß dies insbesondere von einer Änderung der Federkonstanten des Meßrohrs aufgrund von äußeren Einwirkungen, wie Temperatureinwirkungen oder mechanischen Verspannungen, herrührt. Gemäß der Erfindung ist daher vorgesehen, daß das physikalisch-mathematische Modell die jeweils wirksame Federkonstante des Meßrohrs im laufenden Betrieb wiedergibt. Dementsprechend soll das physikalisch-mathematische Modell gemäß einer bevorzugten Weiterbildung der Erfindung Parameter enthalten, die maßgeblich für die Steifigkeit und damit die Federkonstante des Meßrohrs sind. Diese Parameter beschreiben implizit den Einfluß der Prozeßbedingungen wie z. B. der Temperatur, des Drucks oder/und der mechanischen Spannung auf das Meßrohr und dessen Steifigkeit,

Es existiert nun eine Mehrzahl von Möglichkeiten, das Meßrohr zu Schwingungen anzuregen und die dadurch hervorgerufenen Schwingungsantworten des Meßrohrs zu erfassen, um mit Hilfe eines physikalisch-mathematischen Modells die Dichte des durch das Meßrohr fließenden Mediums zu bestimmen. Dabei ist bevorzugt vorgesehen, daß eine Betriebsanregung des Meßrohrs in seiner ersten Eigenform mit einer ersten Frequenz zur Massendurchflußmessung und eine Zusatzanregung des Meßrohrs in seiner ersten Eigenform mit einer von der ersten Frequenz verschiedenen zweiten Frequenz erfolgt, die Resonanzfrequenz des Meßrohrs in seiner ersten Eigenform ermittelt wird und die Dichte des durch das Meßrohr strömenden Mediums über die effektiv schwingende Masse der ersten Eigenform mittels der Resonanzfrequenz des Meßrohrs in der ersten Eigenform und der erfaßten Schwingungen des Meßrohrs erfolgt, die aus der Zusatzanregung des Meßrohrs resultieren.

Dabei ist vorliegend und im weiteren mit "Betriebsanregung" eine derartige Anregung des Meßrohrs gemeint, die für eine eigentliche Massendurchflußmessung erforderlich ist, also erfolgt, um Coriolis-Schwingungen zu generieren, über die in bekannter Weise auf den Massendurchfluß durch das Meßrohr geschlossen werden kann. Mit "Zusatzanregung" werden damit vorliegend und im folgenden jeweils solche Schwingungsanregungen des Meßrohrs bezeichnet, die nicht der eigentlichen Massendurchflußmessung dienen, sondern der Dichtemessung, indem nämlich die durch die entsprechende Zusatzanregung hervorgerufene Schwingungsantwort des Meßrohrs ermittelt und im Rahmen des physikalisch-mathematischen Modells ausgewertet wird.

Gemäß einer anderen bevorzugten Alternative der Erfindung ist vorgesehen, daß eine erste Zusatzanregung des Meßrohrs in seiner ersten Eigenform mit einer ersten Frequenz und eine zweite Zusatzanregung des Meßrohrs in seiner ersten Eigenform mit einer von der ersten Frequenz verschiedenen zweiten Frequenz erfolgt und die. Dichte des durch das Meßrohr strömenden Mediums über die effektiv schwingende Masse der ersten Eigenform mittels der erfaßten Schwingungen des Meßrohrs erfolgt, die aus den beiden Zusatzanregulagen des Meßrohrs resultieren. Bei dieser bevorzugten Alternative der Erfindung sind also erst einmal nur Zusatzanregungen vorgesehen und keine Betriebsanregung, was bei der vorliegend geltenden Bedeutung der Begriffe "Zusatzanregung" und "Betriebsanregung" heißt, daß es sich vorliegend um eine reine Dichtemessung handelt.

Dabei kann gemäß einer bevorzugten Weiterbildung der Erfindung jedoch auch eine zusätzliche Betriebsanregung des Meßrohrs in seiner ersten Eigenform mit einer von der ersten Frequenz und der von der zweiten Frequenz jeweils verschiedenen dritten Frequenz zur Massendurchflußmessung erfolgen und zur Ermittlung der Dichte des durch das Meßrohr strömenden Mediums über die effektiv schwingende Masse der ersten Eigenform zusätzlich die Resonanzfrequenz des Meßrohrs in der ersten Eigenform berücksichtigt werden, Damit kann neben der Dichtemessung auch eine Massendurchflußmessung erfolgen.

Gemäß einer anderen bevorzugten Alternative der Erfmdung erfolgt eine erste Zusatzanregung des Meßrohrs in seiner zweiten Eigenform mit einer ersten Frequenz und eine zweite Zusatzanregung des Meßrohrs in seiner zweiten Eigenform mit einer von der ersten Frequenz verschiedenen zweiten Frequenz, und die Bestimmung der Dichte des durch das Meßrohr strömenden Mediums über die effektiv schwingende Masse der zweiten Eigruform erfolgt mittels der erfaßten Schwingungen des Meßrohrs, die aus den beiden Zusatzanregungen des Meßrohrs resultieren.

Dabei kann gemäß einer bevorzugten Weiterbildung der Erfindung vorgesehen sein, daß eine Betriebsanregung des Meßrohrs in seiner ersten Eigenform mit einer von der ersten Frequenz oder/und von der zweiten Frequenz jeweils verschiedenen dritten Frequenz erfolgt und zur Ermittlung der Dichte des durch das Meßrohr strömenden Mediums über die effektiv schwingende Masse der zweiten Eigenform zusätzlich die Resonanzfrequenz des Meßrohrs in der ersten Eigenform berücksichtigt wird.

Wenn zuvor gesagt worden ist, daß zur Bestimmung der Dichte des durch das Meßrohr strömenden Mediums auch die Resonanzfrequenz des Meßrohrs in einer seiner Eigenformen berücksichtigt wird, so stellt dies eine bekannte Vorgehensweise dar, die auch bei herkömmlichen Coriolis-Massendurchflußmeßgeräten angewendet wird, bei denen die Dichte des durch das Meßrohr strömenden Mediums alleine über die Betrachtung der Eigenfrequenz des Meßrohrs, gegebenenfalls temperatur- oder/und spannungskorrigiert, erfolgt. Dementsprechend muß die Bestimmung der Eigenfrequenz (Resonanzfrequenz) des Meßrohrs in einer seiner Eigenformen vorliegend nicht weiter erläutert werden.

Gemäß einer bevorzugten Weiterbildung der Erfindung, die mit allen vorgenannten Möglichkeiten kombinierbar ist, wird die Temperatur im Massendurchflußmeßgerät erfaßt, um die Temperaturabhängigkeit der Funktion wenigstens einer Einrichtung des Massendurchflußmeßgeräts, wie einem Schwingungserzeuger für das Meßrohr oder/und einem Schwingungssensor für das Meßrohr zu berücksichtigen. Auf diese Weise können bei der Bestimmung der Dichte Temperatureffekte kompensiert werden, die ansonsten nicht in das physikalisch-mathematische Modell eingehen würden.

Gemäß einer bevorzugten Weiterluldung der Erfindung ist ferner vorgesehen, daß die. Temperatur des Meßrohrs erfaßt wird, um eine temperaturabhängige Änderung des.Volumens des Meßrohrs bei der Bestimmung der Dichte zu berücksichtigen. Schließlich ist gemäß einer bevorzugten Weiterbildung der Erfindung noch vorgesehen, daß der Druck im Meßrohr bestimmt wird, um eine druckabhängige Änderung des Volumens des Meßrohrs bei der Bestimmung der Dichte zu berücksichtigen. Auf diese Weisen kann eine weitere Erhöhung der Meßgenauigkeit bei der Bestimmung der Dichte des durch das Meßrohr strömenden Mediums erfolgen. Dabei kann bei der letztgenannten bevorzugten Weiterbildung der Erfindung einerseits eine unmittelbare Druckbestimmung mittels eines Drucksensors aber auch eine mittelbare Druckbestimmung, z. B. über eine ermittelte Federkonstante des Meßrohrs, erfolgen.

Im einzelnen gibt es nun eine Vielzahl von Möglichkeiten, das erfindungsgemäße Verfahren zum Betreiben eines Massendurchflußmeßgeräts auszugestalten und weiterzubilden. Dazu wird auf die dem Patentanspruch 1 nachgeordneten Patentansprüche sowie auf die nachfolgende detaillierte Beschrei bung bevorzugter Ausführungsbeispiele der Erfindung unter Bezugnahme auf die Zeichnung verwiesen. In der Zeichnung zeigt

Fig. 1    den mechanischen Aufbau eines Coriolis-Massendurchflußmeßgeräts zur Verwendung mit den bevorzugten. Ausführungsbeispielen der Erfindung und

Fig. 2    einen für das physikalisch-mathematische Modell verwendeten Modellansatz mit konzentrierten Ersatzelementen.

Herkömmliche Massendurchflußmeßgeräte, die nach dem Coriolis-Prinzip arbeiten, werden häufig nach dem Eigenresonanzverfahren betrieben. Damit kann auch die Dichte des durch das Meßrohr strömenden Mediums bestimmt werden, Dazu geht man als Meßgrundlage von der Modellvorstellung für ein schwingendes Feder-/Massesystem aus, wobei für die Kreisfrequenz $\omega_0$ gilt:

$$\omega_0 = \sqrt{\frac{c}{m}} \qquad\qquad (1)$$

Dabei sind $c$ die effektiv wirksame Federkonstante des Schwingers und seiner Lagerung und $m$ die effektiv wirksame Schwingmasse. Diese Schwingmasse setzt sich aus der Masse des Schwingers selbst und einem gegebenenfalls vorhandenen Inhalt zusammen, also:

$$m = m_P + m_F \qquad\qquad (2)$$

Besteht der Inhalt im Falle des Meßrohrs eines Coriolis-Massendurchflußmeßgeräfs aus einem strömenden Medium, so ist die Masse $m_F$ des Mediums gleich dem Produkt aus seiner Dichte $\rho_F$ und dem Volumen $V_F$ des Meßrohrs:

$$m_F = \rho_F V_F \qquad\qquad (3)$$

Ersetzt man die Schwingmasse durch die effektiv wirksamen Massen des leeren Schwingers $m_p$ und des strömenden Mediums, so gelangt man zu folgender Bestimmungsgleichung für die Dichte des strömenden Mediums als Funktion der Eigenfrequenz:

$$\rho_F = \frac{c}{V_F} \omega_0^{-2} - \frac{m_P}{V_F} \qquad\qquad (4)$$

In dieser Bestimmungsgleichung treten als Parameter die Masse des leeren Schwingers, das Volumen des Meßrohrs und die effektiv wirksame Federkonstante des Schwingers auf. Betrachtet man die Parameter als Konstanten, so läßt sich die Kennlinie der Dichtemessung über die Messung der Eigenfrequenz bei zwei verschiedenen Dichten bestimmen.

Im Realfall können die Parameter der Bestimmungsgleichung (Gl. 4) nicht als Konstanten angenommen werden, und zwar aus folgenden Gründen:

1. Die Federkonstante c setzt sich aus Federkonstanten der Schwingerkomponenten, des Meßrohrs, eines gegebenenfalls vorhandenen Tragrohrs usw. zusammen. Sie ist abhängig von dem jeweiligen Elastizitätsmodul der Komponenten, ihrer Formgebung und ihrer Anordnung. Damit ist sie nicht nur von der Temperatur sondern auch von Temperaturgradienten abhängig. Außerdem ändern sich die Federkonstanten der Schwingerkomponenten infolge der mechanischen Spannung und Spannungsgradienten sowie infolge einer Vielzahl von Prozeßgrößen, wie Temperatur, Druck, Massestrom und Viskosität. Hinzu kommt, daß die Schwingungsamplitude und die Schwingungsform die Nachgiebigkeit beeinflussen.

Zusammengefaßt ist die Federkonstante also eine Funktion zahlreicher Prozeß- und Meßparameter, so daß gilt:

$$c = f(T, \Delta T, \sigma, \Delta\sigma, P, \dot{m}, \dot{\hat{x}}, Formgebung, ...) \qquad (5)$$

Dieser funktionale Zusammenhang zwischen den Einflußgrößen und der Federkonstanten c ist sehr komplex und analytisch nur beschränkt bescbteibbar, so daß die Berücksichtigung der wirksamen Federsteifigkeit mit Hilfe von Zusatzsensoren über die Bestimmungsgleichung (G1. 5) oder einer abgewandelten Farm davon, wie bei herkömmlichen Massendurchflußmeßgeräten mit Temperatursensoren oder Dehnungsmeßstreifen, aufwendig und nicht vollständig ist

2. Die wirksame Schwingmmse m setzt sich aus den effektiv schwingenden Massen der Schwingerkomponenten, des Meßrohrs, des Tragrohrs, der Fluidmasse usw. zusammen. Die effektiv schwingende Masse ist abhängig von Prozeßgrößen, wie Temperatur, Druck, Viskosität, Fluidzusammensetzung sowie von der Schwingungsamplitude, der Schwingungsfrequenz und der Schwingungsform, was ebenfalls eine Frequenzabhängigkeit bewirkt. Dies bedeutet beispielsweise, daß bei den Resonanzfrequenzen des Meßrohrs hauptsächlich das Meßrohr und sein Inhalt zur effektiv schwingenden Masse beitragen, wobei bei den Resonanzfrequenzen der Aufhängung der Beitrag des Meßrohrs und sein Inhalt marginal sind und damit bei diesen Frequenzen die Empfindlichkeit der Dichtemessung gegen Null tendiert. Dieser Frequenzabhängigkeit der Dichtemessung wird bei herkömmlichen Massendurchflußmeßgeräten, die nach dem Coriolis-Prinzip arbeiten, selbst durch sehr aufwendige konstruktive Maßnahmen wie Torsionsschwinger oder Konstanthaltung des Abstands der Resonanzfrequenzen, nur teilweise Rechnung getragen.

3. Der Parameter "Meßrohrvolumen" *V* in der Bestimmungsgleichung der Dichte ist abhängig von Prozeßdruck, mechanischer Spannung am Meßrohr sowie von der Temperatur des Meßrohrs.

Im Prinzip soll also die Dichte des durch das Meßrohr strömenden Mediums unabhängig vom Einfluß der aktuell wirksamen Federsteifigkeit und unabhängig vom aktuell wirksamen Meßvolumen erfaßt werden. Wie eingangs schon ausgeführt, wird dies dadurch erreicht, daß das Meßrohr mit wenigstens zwei voneinander verschiedenen Frequenzen angeregt wird und die resultierenden Schwingungen des Meßrohrs erfaßt werden, wobei die Dichte des durch das Meßrohr strömenden Mediums bestimmt wird, indem die erfaßten Schwingungen des Meßrohrs auf der Grundlage eines physikalisch-mathematischen Modells für die Dynamik des Massendurchflußmeßgeräts ausgewertet werden. Die wesentliche Idee der Erfindung besteht also darin, die gezielte Anregung des Massendurchflußmeßgeräts und die Auswertung der Schwingungsantworten modellgestützt derart durchzuführen, daß die wirksame Federsteifigkeit des Massendurchflußmeßgeräts keinen Einfluß auf die Dichtemessung hat. Die wirksame Federsteifigkeit wird in Verbindung mit der Temperatur auch zur Korrektur des aktuell wirksamen Meßvolumens verwendet.

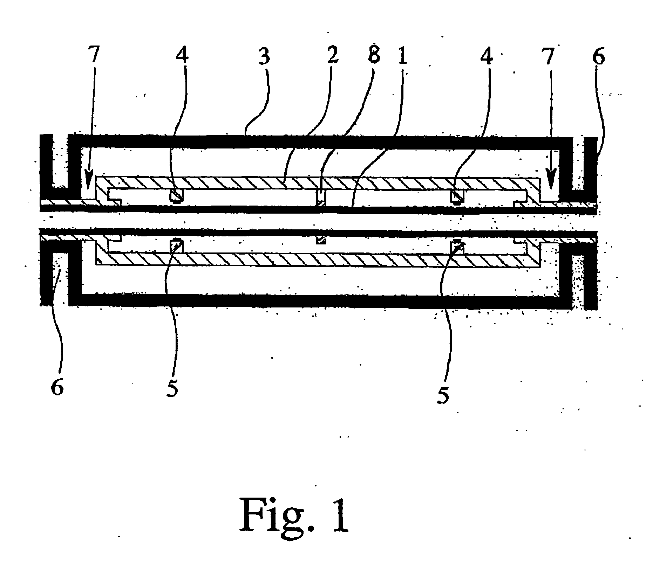

Bei der nachfolgenden Erläuterung bevorzugter Ausführungsbeispiele der Erfindung wird Bezug genommen auf ein Coriolis-Massendurchflußmeßgerät mit einem mechanischen Aufbau, wie in Fig. 1 gezeigt. Dabei sei darauf hingewiesen, daß das erfindungsgemäße Verfahren, also auch die nachfolgend beschriebenen bevorzugten Ausführungsbeispiele der Erfindung, nicht auf ein Coriolis-Massendurchflußmeßgerät der in der Fig. 1 gezeigten Bauform beschränkt ist. Vielmehr sind im wesentlichen beliebige Rohrgeometrien, unter anderem auch mit Döppelrobranordnungen, möglich.

Fig, 1 zeigt nun im Schnitt ein Coriolis-Massendurchflußmeßgerät mit einem Meßrohr 1, einem Tragrohr 2, einem Schutzrohr 3, zwei Schwingungserzeugern 4 und zwei Schwingungssensoren 5. Dabei ist genau ein Meßrohr 1 mit einer geraden Bauform vorgesehen, wobei das aus Fig. 1 ersichtliche Coriolis-Massendurchflußmeßgerät über Flansche 6 in ein bestehendes, nicht weiter dargestelltes Rohrleitungssystem eingebaut werden kann. Die Kopplung zwischen den Flanschen 6 und dem System aus Meßrohr 1 und Tragrohr 2 erfolgt dabei über als Aufhängungen 7 bezeichnete Abschnitte. Außerdem ist in der Mitte des Meßrohrs 1 eine das Meßrohr 1 mit dem Tragrohr 2 verbindende Mittenfeder 8 vorgesehen, die dazu dient, die Steifigkeit des Meßrohrs 1 zu erhöhen, wie z. B. in der DE 42 00 060 A1 beschrieben.

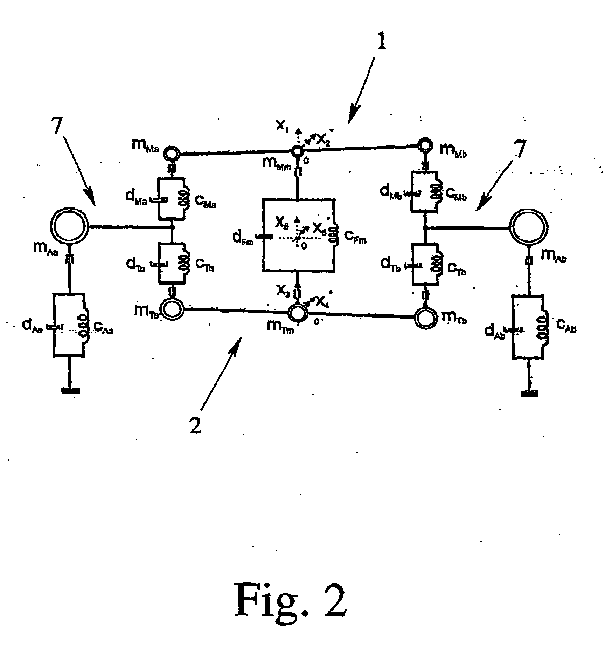

Aus Fig. 2 ist nun ein für das vorliegend verwendete physikalisch-mathematische Modell gültiger Modelleinsatz mit konzentrierten Ersatzelementen des Coriolis-Massendurchflußmeßgeräts ersichtlich. Die wesentlichen mechanischen Bewegungen des Coriolis-Massendurchflußmeßgeräts, wie in Fig. 1 gezeigt, sind die Schwingungen des Meßrohrs 1 und des Tragrohrs 2 in der ersten Eigenform und in der zweiten Eigenform. Sie lassen sich anhand des Schwingverhaltens des aus Fig. 2 ersichtlichen Modells beschreiben. Dabei beschreiben die Ersatzelemente mit Index M die effektiv wirksamen Massen, Federn und Dämpfer des Meßrobrs 1 und die Elemente mit Index T entsprechend die Parameter des Tragrohrs 2. Die mit dem Index A gekennzeichneten Ersatzelemente für Massen, Federn und Dämpfer beschreiben die Ersatzelemente der Aufhängungen 7. Die Indizes a und b stellen jeweils die linke bzw. die rechte Hälfte des Meßrohrs 1, des Tragrohr 2 bzw, der Aufhängungen 7 dar. Die Feder und der Dämpfer mit dem Index $Fm$ tragen der Tatsache Rechnung, daß das Meßrohr 1 in der Mitte geführt ist, nämlich durch die Mittenfeder 8. Ist keine Mittenfeder 8 vorgesehen, so entfallen natürlich die entsprechenden Terme. Die Massen mit dem Index $m$ tragen der Tatsache Rechnung, daß an den Schwingungen in der ersten Eigenform des Meßrohrs bzw. des Tragrohrs eine größere Masse beteiligt ist, als an den Schwingungen in der zweiten Eigenform.

Einer Schwingung in der ersten Eigenform entspricht in diesem Modell die gleichphasige, translatorische Bewegung der Massen des Meßrohrs 1, des Tragrohrs 2 bzw. der Aufhängungen 7. Eine Rotation der äußeren Massen $a$ und b um die Drehachse $x_2$, $x_4$ bzw. $x_6$ entspricht einer Schwingung in der zweiten Exgenform. Die mathematische Beschreibung des Schwingungsverhaltens dieses Systems kann mit Hilfe der Lagrange-Gleichung 2. Art abgeleitet werden, was im Detail am Ende dieser Beschreibung ausgeführt ist.

Unter den Voraussetzungen, daß die Schwingungen des Meßrohrs in seinen Eigenformen voneinander entkoppelt sind, daß die Bewegungen des Trägerrohrs vernachlässigt werden und daß die Aufhängung keine Bewegung ausführt, kann als einfachstes Modell für die Dichtemessung ein Modell 2. Ordnung angesetzt werden, mit dem die Schwingung des Meßrohrs 1 nur in seinen Eigenformen $v = 1, 2, ...$ beschrieben wird. Die zugehörige Übertragungsfunktion lautet:

$$G_v(s) = \frac{k_v s}{s^2 + 2 d_v \omega_{0v} s + \omega_{0v}^2} \tag{6}$$

für die Parameter dieser Übertragungsfunktion gilt beispielsweise für die erste Eigenform:

$$k_1 = \frac{1}{m_{Ma} + m_{Mb} + m_{Mm}} = \frac{1}{m_1} \tag{7}$$

$$\omega_{01} = \sqrt{\frac{c_{Ma} + c_{Mb} + c_{Fm}}{m_{Ma} + m_{Mb} + m_{Mm}}} = \sqrt{c_1 k_1} = \sqrt{\frac{c_1}{m_1}} \tag{8}$$

$$d_1 = \frac{1}{2} \frac{d_{Ma} + d_{Mb} + d_{Fm}}{\sqrt{(c_{Ma} + c_{Mb} + c_{Fm})(m_{Ma} + m_{Mb} + m_{Mm})}} \tag{9}$$

Die effektiv schwingende Masse des MeBrohrs 1 setzt sich aus der Masse des leeren Meßrohrs 1 und der Masse des strömenden Mediums zusammen. Kennt man die Masse des leeren Meßrohrs 1 und sein Volumen, so kann man die Dichte über die Bestimmung der Parameter der Übertragungsfunktion bestimmen. Die Dichte beeinflußt alle drei Parameter der Übertragungsfunktion, und daher ist ihre Messung grundsätzlich über alle drei Parameter der Übertragungsfunktion möglich. Die exakte Messung der normierten Dämpfung $d_v$ ist allerdings aufgrund der schnellen Änderung aufwendig. Zusätzlich hängt dieser Parameter von den Feder- und Dämpfungskonstanten ab, die sich im laufenden Betrieb verändern und daher in Echtzeit bestimmt werden müssen.

Die Eigenfrequenz $\omega_{01}$ des ersten Modes entspricht in guter Näherung der durch einen Phasenregler eingestellten Betriebsfrequenz des Coriolis-Massendurchflußmeßgeräts und ist daher bekannt. Der Nachteil des Parameters $\omega_v$ ist seine Abhängigkeit von der Federkonstanten $c_v$. Der Parameter $k_v$ hängt nur von den schwingenden Massen ab, kann aber nur mit Hilfe einer zusätzlichen Anregung bestimmt werden.

Sämtliche Überlegungen gelten entsprechend auch für eine reine Betrachtung der höheren Moden des Meßrohrs 1 und insbesondere auch für eine Betrachtung der zweiten Eigenform mit der Übertragungsfunktion:

$$G_2(s) = \frac{k_2 s}{s^2 + 2d_2\omega_{02}s + \omega_{02}^2} \qquad (10)$$

Für die Parameter dieser Übertragungsfunktion gilt:

$$k_2 = \frac{1}{m_{Ma} + m_{Mb}} = \frac{1}{m_2} \qquad (11)$$

$$\omega_{02} = \sqrt{\frac{c_{Ma} + c_{Mb}}{m_{Ma} + m_{Mb}}} = \sqrt{c_2 k_2} = \sqrt{\frac{c_2}{m_2}} \qquad (12)$$

$$d_2 = \frac{1}{2} \frac{d_{Ma} + d_{Mb}}{\sqrt{(c_{Ma} + c_{Mb})(m_{Ma} + m_{Mb})}} \qquad (13)$$

Im folgenden wird die Dichtemessung basierend auf den Parametern $\omega_{0v}$, $C_v$, $k_v$ und $m_v$ näher erläutert. Dabei wird die wirksame Federkonstante im laufenden Betrieb des Coriolis-Massendnrchflußmcßgeräts berücksichtigt, was durch teilweise oder vollständige Identifikation des Modells 2. Ordnung für eine der Eigenformen erfolgen kann.

**Direkte Dichtemessung über die effektiv schwingende Masse $m_v$**

Um die effektiv schwingende Masse unabhängig von der wirksamen Federkonstanten $c_v$ zu bestimmen und daraus die Dichte des strömenden Mediums zu ermitteln, wird das Coriolis-Massendurchflußmeßgerät bei einer oder mehreren Zusatzfrequenzen angeregt und die Übertragungsfunktion gemessen. Hieraus werden dann die Parameter $k_v$ bzw. die Masse $m_v$, sowie die Steifigkeit bzw. die Federkonstante $c_v$ berechnet.
Einige bevorzugte Verfahren sind nachfolgend in der Eigenform 1 bzw. in der Eigenform 2 beschrieben. Sie können entsprechend auch für andere Eigenformen angewandt werden,

**Dichtemessung über eine einzige Zusatzanregung in der ersten Eigenform**

Die Bestimmungsgleichung für die Masse $m_l$ lautet bei einer Zusatzfrequenz $\omega_{Zl}$ nach einigen Ümformungen:

$$m_1 = \frac{\omega_{Z1}}{(\omega_{01}^2 - \omega_{Z1}^2)} \cdot \frac{\mathrm{Im}\{G_1(j\omega_{Z1})\}}{\mathrm{Im}\{G_1(j\omega_{Z1})\}^2 + \mathrm{Re}\{G_1(j\omega_{Z1})\}^2} \qquad (14)$$

Unter der Voraussetzung, daß der Abstand der Zusatzanregung zur Resonanz-frequenz groß genug ist, vereinfacht sich Gleichung 14 zu:

$$m_1 = \frac{\omega_{Z1}}{\mathrm{Im}\{G_1(j\omega_{Z1})\}\omega_{01}^2} \qquad (14a)$$

Die wirksame Federkonstante ergibt sich aus:

$$c_1 = \omega_{01}^2 m_1 \approx \frac{\omega_{Z1}}{\mathrm{Im}\{G_1(j\omega_{Z1})\}} \qquad (15)$$

Bei der Wahl der Frequenzlage der Zusatzanregungen ist abzuwägen zwischen einer möglichst großen Amplitude der Meßsignale — der Frequenzgang der Übertragungsfunktion $G_1$ bzw. $G_2$ fällt oberhalb und unterhalb der Eigenfrequenz mit -20[dB] pro Dekade ab - und einem ausreichenden Abstand zur Betriebsfrequenz $\omega_{0v}$, um eine gute Trennung der Signale sicherstellen zu können. Dies gilt auch für die im folgenden beschriebenen bevorzugten Ausführungsbeispiele der Erfindung,

**Dichtemessung über wenigstens eine Zusatzanregung in der ersten Eigenform und die Betriebsanregung in der ersten Eigenform**

Der Parameter $m_l$ läßt sich ohne Verwendung der Eigenfrequenz, entsprechend der Betriebsfrequenz, über Anregung bei mindestens zwei zusätzlichen Frequenzen $\omega_{ZA}$ und $\omega_{ZB}$ in der ersten Eigenform bestimmen. Die Bestimmungsgleichung für die Masse $m_l$ lautet:

$$m_1 = \frac{1}{\omega_{ZB}^2 - \omega_{ZA}^2} \frac{\omega_{ZA} \operatorname{Im}\{G_1(j\omega_{ZA})\}}{\operatorname{Im}\{G_1(j\omega_{ZA})\}^2 + \operatorname{Re}\{G_1(j\omega_{ZA})\}^2}$$
$$- \frac{1}{\omega_{ZB}^2 - \omega_{ZA}^2} \frac{\omega_{ZB} \operatorname{Im}\{G_1(j\omega_{ZB})\}}{\operatorname{Im}\{G_1(j\omega_{ZB})\}^2 + \operatorname{Re}\{G_1(j\omega_{ZB})\}^2} \qquad (16)$$

Theoretisch beeinflußt die Lage der Zusatzfrequenzen die Dichtemessung nicht. Praktisch ist jedoch eine geringfügige Abhängigkeit vorhanden, so daß die Lage der Zusatzfrequenzen bevorzugt an die Betriebsfrequenz gekoppelt und diesbezüglich spiegelsymmetrisch gewählt wird.

**Dichtemessung über zwei Zusatzanregungen in der zweiten Eigenform**

Der Parameter $m_2$ läßt sich als Maß für die Dichte des strömenden Mediums über Anregungen bei wenigstens zwei zusätzlichen Frequenzen in der zweiten Eigenform bestimmen. Die Bestimmungsgleichung für die Masse $m_2$ lautet:

$$m_2 = \frac{1}{\omega_{ZB}^2 - \omega_{ZA}^2} \frac{\omega_{ZA} \operatorname{Im}\{G_2(j\omega_{ZA})\}}{\operatorname{Im}\{G_2(j\omega_{ZA})\}^2 + \operatorname{Re}\{G_2(j\omega_{ZA})\}^2}$$
$$- \frac{1}{\omega_{ZB}^2 - \omega_{ZA}^2} \frac{\omega_{ZB} \operatorname{Im}\{G_2(j\omega_{ZB})\}}{\operatorname{Im}\{G_2(j\omega_{ZB})\}^2 + \operatorname{Re}\{G_2(j\omega_{ZB})\}^2} \qquad (17)$$

Bei den Zusatzanregungen kann eine der Anregungsfrequenzen an der Eigenfrequenz des zweiten Modes liegen. Die Wahl der Lage der Zusatzfrequenzen erfolgt jedoch vorzugsweise spiegelsymmetrisch zur Resonanzfrequenz $\omega_{01}$.

**Indirekte Dichtemessung über die effektiv wirksame Federkonstante $c_v$**

Um die Vorzüge der Dichtemessung über die Eigenfrequenz $\omega_{01}$ und über die Zusatzanregung voll auszunutzen, werden beide Verfahren miteinander verbunden. Hierbei ergeben sich zwei bevorzugte Ausführungsbeispiele der Erfindung.

**Dichtemessung über zwei Zusatzanregungen in der zweiten Eigenform und die Betriebsanregung in der ersten Eigenform**

Da zur Bestimmung der Empfindlichkeit der Massendurchflußmessung eine oder mehrere Zusatzanregungen in der zweiten Eigenform verwendet werden, bietet es sich an, diese auch für die Bestimmung der Dichte zu nutzen. Dafür wird zunächst die Federkonstante des zweiten Modes $c_2$ mittels der Zusatzanregung des zweiten Modes bestimmt. Die Besümmungsgleirhung lautet bei zwei Zusatzfrequenzen $\omega_{ZA}$ und $\omega_{ZB}$ nach einigen Umformungen:

$$c_2 = \frac{\omega_{ZA}\omega_{ZB}}{\omega_{ZB}^2 - \omega_{ZA}^2} \frac{\omega_{ZB}\,\mathrm{Im}\{G_2(j\omega_{ZA})\}}{\mathrm{Im}\{G_2(j\omega_{ZA})\}^2 + \mathrm{Re}\{G_2(j\omega_{ZA})\}^2}$$

$$-\frac{\omega_{ZA}\omega_{ZB}}{\omega_{ZB}^2 - \omega_{ZA}^2} \frac{\omega_{ZA}\,\mathrm{Im}\{G_2(j\omega_{ZB})\}}{\mathrm{Im}\{G_2(j\omega_{ZB})\}^2 + \mathrm{Re}\{G_2(j\omega_{ZB})\}^2} \quad (18)$$

Im Falle einer einzigen Zusatzanregung mit der Frequenz $\omega_{Z1}$ ergibt sich näherungsweise:

$$c_2 = \frac{\omega_{Z1}}{\mathrm{Im}\{G_1(j\omega_{Z1})\}} \quad (18a)$$

Zwischen den Federkoxistanten zweier Moden besteht der Zusammenhang:

$$c_1 = f(c_2, c_{n_1}, T, \ldots) \quad (19)$$

wobei im speziellen Fall gilt:

$$c_1 = k \cdot c_2 + c_m(T) \quad (20)$$

Der Propordonalitätsfaktor k ist ein Desigaparanieter und kann als konstant angesehen werden. Die Federkonstante $C_m$ beschreibt im wesentlichen das Verhalten der Mittenfeder 8, deren Federsteifigkeit mit Hilfe der gemessenen Temperatur korrigiert wird.

Damit läßt sich indirekt die effektiv wirksame Federsteifigkeit $c_l$ des Modes 1 bestimmen. Da die Eigenfrequenz $\omega_{01}$ aufgrund der Phasenregelung bei der Betriebsanregung näherungsweise bekannt ist, kann unter Verwendung der Beziehung

$$m_1 = \frac{c_1}{\omega_{01}^2} \quad (21)$$

die effelctiv schwingende Masse der ersten Eigenform berechnet und zur Dichtemessung verwendet werden.

Die Federkonstante hängt bei typischen Coriolis-Massendurchflußmeßgeräten nur geringfügig von der Schwingungsamplitude ab, so daß der Einfluß der Schwingungsamplitude auf die Dichtemessung vernachlässigt werden kann. Bei Geräten mit größerer Dynamik in der Amplitude, bei denen die Amplitudenabhängigkeit größer ausfällt, ist eine Offline- oder auch eine Online-Korrektur durch die Modulation der Schwingungsamplitude bevorzugt.

**Dichtemessung über zwei Zusatzanregungen in der ersten Eigenform und die Betriebsanregung in der ersten Eigenform**

Alternativ ist es möglich, durch zwei zusätzliche Anregungen der ersten Eigenform die Federkonstante $c_1$ direkt zu bestimmen und die für die Korrektur der Massendurchflußmessung benötigte Federsteifigkeit $c_2$ durch Umstellen von Gl. 20 zu berechnen.

Die Bestimmungsgleichung für die Federkonstante $c_1$ lautet:

$$c_1 = \frac{\omega_{ZA}\omega_{ZB}}{\omega_{ZB}^2 - \omega_{ZA}^2} \frac{\omega_{ZB}\,\mathrm{Im}\{G_1(j\omega_{ZA})\}}{\mathrm{Im}\{G_1(j\omega_{ZA})\}^2 + \mathrm{Re}\{G_1(j\omega_{ZA})\}^2}$$

$$-\frac{\omega_{ZA}\omega_{ZB}}{\omega_{ZB}^2 - \omega_{ZA}^2} \frac{\omega_{ZA}\,\mathrm{Im}\{G_1(j\omega_{ZB})\}}{\mathrm{Im}\{G_1(j\omega_{ZB})\}^2 + \mathrm{Re}\{G_1(j\omega_{ZB})\}^2} \quad (22)$$

Im folgenden wird die Dichtemessung mit einem Modell 4. Ordnung gemäß einem weiteren bevorzugten Ausführungsbeispiel der Erfindung erläutert. Dabei wird die Annahme, daß die Eigenformen voneinander entkoppelt sind, fallengelassen.

Betrachtet man die Differentialgleichungen des gekoppelten Systems von erster Eigenform und zweiter Eigenform des Meßrohrs, das für die Massendurchflußmessung zugrundegelegt worden ist (im Detail weiter unten ausgeführt), so erkennt man, daß die Schnelle in diesem System ihr Maximum nicht an der Eigenfrequenz $\omega_{01}$ bzw. $\omega_{02}$ sondern an den Resonanzfrequenzen des gekoppelten Systems erreicht:

Kopplung der zweiten Eigenform auf die erste Eigenform des Meßrohrs 1:

$$(m_{Ma} + m_{Mb} + m_{Mm})\ddot{x}_1 + (d_{Ma} + d_{Mb} + d_m)\dot{x}_1 + (c_{Ma} + c_{Mb} + c_m)x_1 +$$
$$(m_{Ma} - m_{Mb})\ddot{x}_2 + (d_{Ma} - d_{Mb})\dot{x}_2 + (c_{Ma} - c_{Mb})x_2 = F_1 \quad (23)$$

Kopplung der ersten Eigenform auf die zweite Eigezzform des Meßrohrs 1:

$$(m_{Ma} + m_{Mb})\ddot{x}_2 + (d_{Ma} + d_{Mb})\dot{x}_2 + (c_{Ma} + c_{Mb})x_2 +$$
$$(m_{Ma} - m_{Mb})\ddot{x}_1 + (d_{Ma} - d_{Mb})\dot{x}_1 + (c_{Ma} - c_{Mb})x_1 = F_2 \quad (24)$$

Die Resonanzfrequenzen sind abhängig sowohl von den Auslenkungs- und Beschleunigungskopplungen als auch von den Geschwindigkeits- und Massenstromkopplungen. Eine Berücksichtigung dieser Kopplungen erfolgt entweder durch direkte Identifikation des Systems vierter Ordnung samt Kopplungen über zusätzliche Anregungen oder durch ihre Kompensation, wie die bei einer Massendurchflußmessung mögliche $k_{SA}$-Kompensation, und damit Entkopplung und Messung der Dichte mittels eines Systems zweiter Ordnung, wie weiter oben beschrieben. Bezüglich der bei einer Massendurchflußmessung möglichen $k_{SA}$-Kompensation wird ausdrücklich auf die DE 100 02 635 Al verwiesen, deren Gegenstand hiermit vollinhaltlich auch zum Gegenstand der vorliegenden Beschreibung gemacht wird.

Weiterhin soll nun der Einfluß der Bewegungen des Tragrohrs auf die Dichtemessung beschrieben werden. Dabei wird zwar die Annahme beibehalten, daß die Aufhängungen 7 sich nicht bewegen, aber es wird die Annahme fallen gelassen, daß die Schwingungen des Tragrohrs 2 relativ zum Meßrohr 1 vernachlässigbar klein sind und die Bewegungen des Meßrohrs 1 und des Tragrohrs 2 bezüglich ihrer Eigenformen entkoppelt sind. In diesem Fall ergeben sich als Kombination der Eigenformen des Meßrohrs 1 und des Tragrohrs 2 verschiedene Modelle unterschiedlicher Ordnungem

Einfluβ der Bewegungen des Tragrohrs 2 auf die erste Eigenform:

$$(m_{Ma} + m_{Mb} + m_{Mm})\ddot{x}_1 + (d_{Ma} + d_{Mb} + d_m)\dot{x}_1 + (c_{Ma} + c_{Mb} + c_m)x_1 +$$
$$(m_{Ma} - m_{Mb})\ddot{x}_2 + (d_{Ma} - d_{Mb})\dot{x}_2 + (c_{Ma} - c_{Mb})x_2 +$$
$$(-d_m)\dot{x}_3 + (-c_m)x_3 +$$
$$(-d_{Ma} - d_{Mb})\dot{x}_5 + (-c_{Ma} - c_{Mb})x_5 +$$
$$(-d_{Ma} + d_{Mb})\dot{x}_6 + (-c_{Ma} + c_{Mb})x_6 = F_1 \quad (25)$$

Einfluß der Bewegungen des Tragrohrs 2 auf die zweite Eigenform:

$$(m_{Ma} + m_{Mb})\ddot{x}_2 + (d_{Ma} + d_{Mb})\dot{x}_2 + (c_{Ma} + c_{Mb})x_2 +$$
$$(m_{Ma} - m_{Mb})\ddot{x}_1 + (d_{Ma} - d_{Mb})\dot{x}_1 + (c_{Ma} - c_{Mb})x_1 +$$
$$(-d_{Ma} + d_{Mb})\dot{x}_5 + (-c_{Ma} + c_{Mb})x_5 +$$
$$(-d_{Ma} - d_{Mb})\dot{x}_6 + (-c_{Ma} - c_{Mb})x_6 = F_2 \tag{26}$$

Hierbei ist zu beachten, daß der Einfluß der Bewegungen des Tragrohrs 2 auf die Bewegungen des Meßrohrs 1 indirekt über die Bewegung der Freiheitsgrade $x_5$ und $x_6$ modelliert ist. Zur Identifikation dieser Systeme sind weitere Informationen über die Verteilung der effektiv schwingenden Masse auf das Meßrohr 1 bzw. das Tragrohr 2 erforderlich. Diese Informationen können nicht aus den in Fig. 1 gezeigten Schwingungssensoren 5 extrahiert werden, die nur die relativen Bewegungen von Meßrohr 1 und Tragrohr 2 messen. Dabei geht man davon aus, daß die Resonanzstellen des Tragrohrs 2 nicht im verwendeten Frequenzbereich des Meßrohrs 1 liegen, Will man dennoch den Einfluß der Bewegungen des Tragrohrs 2 auf die Dichtemessung berücksichtigen oder überwachen, so sind zusätzliche Sensoren zur absoluten Messung der Meß- und/oder der Tragrohrbewegung erforderlich. Diese Bewegungen in den Freiheitsgraden $x_5$ und $x_6$ können durch geeignete Sensoren, wie schnelle elektromagnetische Sensoren, Dehnungsstreifen (DMS) oder Beschleunigungssensoren erfaßt werden, die in Fig. 1 nicht weiter dargestellt sind.

Schließlich wird im folgenden noch der Einfluß der Bewegungen der Aufhängungen 7 auf die Dichtemessung betrachtet. Dabei wird angenommen, daß die Aufhängungen 7 auch Bewegungen ausführen können. Mißt man die Bewegungen des Meßrohrs 1 gegenüber dem Tragrohr 2, wie im vorliegenden Fall, selektiv bezüglich der eingeprägten Schwingungen, so kann nur eine zusätzliche äußere Fremdanregung in der Nähe der Antriebsfrequenz zu einer Meßunsicherheit bei der Dichtemessung beitragen. Die Fremdanregung des Tragrohrs 2 und des Meßrohrs 1 im Betriebsfrequenzbereich wird durch die mechanische Auslegung des Coriolis-Massendurchflußmeßgeräts im allgemeinen aber weitestgehend unterbunden. Sonst sind die Einflüsse der Bewegungen der Aufhängungen 7 auf die Dichtemessung indirekt über die Bewegung der Freiheitsgrade $x_5$ und $x_6$ zu berücksichtigen. Diese Bewegungen können wie im vorangegangenen Abschnitt durch geeignete Sensoren, wie schnelle elektromagnetische Sensoren, Dehnungsmeßstreifen (DMS) oder Beschleunigungssensoren erfaßt werden.

Translatorische Bewegung der Aufhängung entlangt der $x_5$-Achse:

$$(m_{Aa} + m_{Ab})\ddot{x}_5 + (d_{Ma} + d_{Mb} + d_{Ta} + d_{Tb} + d_{Aa} + d_{Ab})\dot{x}_5 +$$

$$(c_{Ma} + c_{Mb} + c_{Ta} + c_{Tb} + c_{Aa} + c_{Ab})x_5 +$$

$$(-d_{Ma} - d_{Mb})\dot{x}_1 + (-c_{Ma} - c_{Mb})x_1 +$$
$$(-d_{Ma} + d_{Mb})\dot{x}_2 + (-c_{Ma} + c_{Mb})x_2 +$$
$$(-d_{Ta} - d_{Tb})\dot{x}_3 + (-c_{Ta} - c_{Tb})x_3 +$$
$$(-d_{Ta} + d_{Tb})\dot{x}_4 + (-c_{Ta} + c_{Tb})x_4 +$$
$$(m_{Aa} - m_{Ab})\ddot{x}_6 +$$
$$(d_{Ma} - d_{Mb} + d_{Ta} - d_{Tb} + d_{Aa} - d_{Ab})\dot{x}_6 + (c_{Ma} - c_{Mb} + c_{Ta} - c_{Tb} + c_{Aa} - c_{Ab})x_6$$

Rotatorische Bewegung der Aufhängung um die $x_6$-Achse:

$$(m_{Aa} + m_{Ab})\ddot{x}_6 + (d_{Ma} + d_{Mb} + d_{Ta} + d_{Tb} + d_{Aa} + d_{Ab})\dot{x}_6 +$$

$$(c_{Ma} + c_{Mb} + c_{Ta} + c_{Tb} + c_{Aa} + c_{Ab})x_6 +$$

$$(-d_{Ma} + d_{Mb})\dot{x}_1 + (-c_{Ma} + c_{Mb})x_1 +$$
$$(-d_{Ma} - d_{Mb})\dot{x}_2 + (-c_{Ma} - c_{Mb})x_2 +$$
$$(-d_{Ta} + d_{Tb})\dot{x}_3 + (-c_{Ta} + c_{Tb})x_3 +$$
$$(-d_{Ta} - d_{Tb})\dot{x}_4 + (-c_{Ta} - c_{Tb})x_4 +$$
$$(m_{Aa} - m_{Ab})\ddot{x}_5 +$$
$$(d_{Ma} - d_{Mb} + d_{Ta} - d_{Tb} + d_{Aa} - d_{Ab})\dot{x}_5 + (c_{Ma} - c_{Mb} + c_{Ta} - c_{Tb} + c_{Aa} - c_{Ab})x_5$$

$$= F_6 \qquad (28)$$

Abschließend seien noch die Energiebilanz und die Bewegungsgleichungen wiedergegeben, auf die weiter oben Bezug genommen worden ist.

**Energiebilanz**

Kinetische Energie:

$$E = \frac{1}{2}m_{Ma}(\dot{x}_1 + \dot{x}_2)^2 + \frac{1}{2}m_{Mb}(\dot{x}_1 - \dot{x}_2)^2 + \frac{1}{2}m_{Mm}\dot{x}_1^2 +$$

$$\frac{1}{2}m_{Ta}(\dot{x}_3 + \dot{x}_4)^2 + \frac{1}{2}m_{Tb}(\dot{x}_3 - \dot{x}_4)^2 + \frac{1}{2}m_{Tm}\dot{x}_3^2 + \qquad (29)$$

$$\frac{1}{2}m_{Aa}(\dot{x}_5 + \dot{x}_6)^2 + \frac{1}{2}m_{Ab}(\dot{x}_5 - \dot{x}_6)^2$$

Dissipierte Energie pro Zeiteinheit:

$$D = \frac{1}{2}d_{Ma}(\dot{x}_1 + \dot{x}_2 - \dot{x}_5 - \dot{x}_6)^2 + \frac{1}{2}d_{Mb}(\dot{x}_1 - \dot{x}_2 - \dot{x}_5 + \dot{x}_6)^2 +$$

$$\frac{1}{2}d_{Ta}(-\dot{x}_3 - \dot{x}_4 + \dot{x}_5 + \dot{x}_6)^2 + \frac{1}{2}d_{Tb}(-\dot{x}_3 + \dot{x}_4 + \dot{x}_5 - \dot{x}_6)^2 +$$

$$\frac{1}{2}d_{Aa}(\dot{x}_5 + \dot{x}_6)^2 + \frac{1}{2}d_{Ab}(\dot{x}_5 - \dot{x}_6)^2 + \qquad (30)$$

$$\frac{1}{2}d_m(\dot{x}_1 - \dot{x}_3)^2$$

Potentielle Energie:

$$U = \frac{1}{2}c_{Ma}(x_1 + x_2 - x_5 - x_6)^2 + \frac{1}{2}c_{Mb}(x_1 - x_2 - x_5 + x_6)^2 +$$

$$\frac{1}{2}c_{Ta}(-x_3 - x_4 + x_5 + x_6)^2 + \frac{1}{2}c_{Tb}(-x_3 + x_4 + x_5 - x_6)^2 +$$

$$\frac{1}{2}c_{Aa}(x_5 + x_6)^2 + \frac{1}{2}c_{Ab}(x_5 - x_6)^2 + \tag{31}$$

$$\frac{1}{2}c_m(x_1 - x_3)^2$$

Bewegungsgleichungen

$$\frac{d}{dt}\left(\frac{\partial E}{\partial \dot{q}_n}\right) - \frac{\partial E}{\partial q_n} + \frac{\partial D}{\partial \dot{q}_n} + \frac{\partial U}{\partial q_n} = F_n \tag{32}$$

Erste-Eigenform-Translation des Meßrohrs entlang der $x_1$-Achse:

$$
\begin{aligned}
&(m_{Ma} + m_{Mb} + m_{Mm})\ddot{x}_1 + (d_{Ma} + d_{Mb} + d_m)\dot{x}_1 + (c_{Ma} + c_{Mb} + c_m)x_1 + \\
&(m_{Ma} - m_{Mb})\ddot{x}_2 + (d_{Ma} - d_{Mb})\dot{x}_2 + (c_{Ma} - c_{Mb})x_2 + \\
&(-d_m)\dot{x}_3 + (-c_m)x_3 + \\
&(-d_{Ma} - d_{Mb})\dot{x}_5 + (-c_{Ma} - c_{Mb})x_5 + \\
&(-d_{Ma} + d_{Mb})\dot{x}_6 + (-c_{Ma} + c_{Mb})x_6 = F_1
\end{aligned}
\tag{33}
$$

Zweite-Eigenform-Rotation des Meßrohrs um die $x_2$-Achse:

$$
\begin{aligned}
&(m_{Ma} + m_{Mb})\ddot{x}_2 + (d_{Ma} + d_{Mb})\dot{x}_2 + (c_{Ma} + c_{Mb})x_2 + \\
&(m_{Ma} - m_{Mb})\ddot{x}_1 + (d_{Ma} - d_{Mb})\dot{x}_1 + (c_{Ma} - c_{Mb})x_1 + \\
&(-d_{Ma} + d_{Mb})\dot{x}_5 + (-c_{Ma} + c_{Mb})x_5 + \\
&(-d_{Ma} - d_{Mb})\dot{x}_6 + (-c_{Ma} - c_{Mb})x_6 = F_2
\end{aligned}
\tag{34}
$$

Translation des Trägerrohrs entlang der $x_3$-Achse:

$$
\begin{aligned}
&(m_{Ta} + m_{Tb} + m_{Tm})\ddot{x}_3 + (d_{Ta} + d_{Tb} + d_m)\dot{x}_3 + (c_{Ta} + c_{Tb} + c_m)x_3 + \\
&(-d_m)\dot{x}_1 + (-c_m)x_1 + \\
&(m_{Ta} - m_{Tb})\ddot{x}_4 + (d_{Ta} - d_{Tb})\dot{x}_4 + (c_{Ta} - c_{Tb})x_4 + \\
&(-d_{Ta} - d_{Tb})\dot{x}_5 + (-c_{Ta} - c_{Tb})x_5 + \\
&(-d_{Ta} + d_{Tb})\dot{x}_6 + (-c_{Ta} + c_{Tb})x_6 = -F_1
\end{aligned}
\tag{35}
$$

Rotation des Trägerrohrs um die $x_4$-Achse:

$$(m_{Ta} + m_{Tb})\ddot{x}_4 + (d_{Ta} + d_{Tb})\dot{x}_4 + (c_{Ta} + c_{Tb})x_4 +$$
$$(m_{Ta} - m_{Tb})\ddot{x}_3 + (d_{Ta} - d_{Tb})\dot{x}_3 + (c_{Ta} - c_{Tb})x_3 +$$
$$(-d_{Ta} + d_{Tb})\dot{x}_5 + (-c_{Ta} + c_{Tb})x_5 +$$
$$(-d_{Ta} - d_{Tb})\dot{x}_6 + (-c_{Ta} - c_{Tb})x_6 = -F_2 \tag{36}$$

Translation entlang der $x_5$-Achse:

$$(m_{Aa} + m_{Ab})\ddot{x}_5 + (d_{Ma} + d_{Mb} + d_{Ta} + d_{Tb} + d_{Aa} + d_{Ab})\dot{x}_5 +$$
$$(c_{Ma} + c_{Mb} + c_{Ta} + c_{Tb} + c_{Aa} + c_{Ab})x_5 +$$
$$(-d_{Ma} - d_{Mb})\dot{x}_1 + (-c_{Ma} - c_{Mb})x_1 +$$
$$(-d_{Ma} + d_{Mb})\dot{x}_2 + (-c_{Ma} + c_{Mb})x_2 +$$
$$(-d_{Ta} - d_{Tb})\dot{x}_3 + (-c_{Ta} - c_{Tb})x_3 + \tag{37}$$
$$(-d_{Ta} + d_{Tb})\dot{x}_4 + (-c_{Ta} + c_{Tb})x_4 +$$
$$(m_{Aa} - m_{Ab})\ddot{x}_6 +$$
$$(d_{Ma} - d_{Mb} + d_{Ta} - d_{Tb} + d_{Aa} - d_{Ab})\dot{x}_6 +$$
$$(c_{Ma} - c_{Mb} + c_{Ta} - c_{Tb} + c_{Aa} - c_{Ab})x_6 = F_5$$

Rotation um die $x_6$-Achse:

$$(m_{Aa} + m_{Ab})\ddot{x}_6 + (d_{Ma} + d_{Mb} + d_{Ta} + d_{Tb} + d_{Aa} + d_{Ab})\dot{x}_6 +$$
$$(c_{Ma} + c_{Mb} + c_{Ta} + c_{Tb} + c_{Aa} + c_{Ab})x_6 +$$
$$(-d_{Ma} + d_{Mb})\dot{x}_1 + (-c_{Ma} + c_{Mb})x_1 +$$
$$(-d_{Ma} - d_{Mb})\dot{x}_2 + (-c_{Ma} - c_{Mb})x_2 +$$
$$(-d_{Ta} + d_{Tb})\dot{x}_3 + (-c_{Ta} + c_{Tb})x_3 + \tag{38}$$
$$(-d_{Ta} - d_{Tb})\dot{x}_4 + (-c_{Ta} - c_{Tb})x_4 +$$
$$(m_{Aa} - m_{Ab})\ddot{x}_5 +$$
$$(d_{Ma} - d_{Mb} + d_{Ta} - d_{Tb} + d_{Aa} - d_{Ab})\dot{x}_5 +$$
$$(c_{Ma} - c_{Mb} + c_{Ta} - c_{Tb} + c_{Aa} - c_{Ab})x_5 = F_6$$

**Patentansprüche**

1. Verfahren zum Betreiben eines Massendurchflußmeßgeräts, das nach dem Coriolis-Prinzip arbeitet und von einem Medium durchströmt wird, wobei das Massendurchflußmeßgerät ein von einem Medium durchströmtes Meßrohr (1) aufweist, das Meßrohr (1) mit wenigstens zwei voneinander verschiedenen Frequenzen oder/und in wenigstens zwei voneinander verschiedenen Eigenformen zu Schwingungen angeregt wird und die resultierenden Schwingungen des Meßrohrs (1) erfaßt werden, wobei die Dichte des durch das Meßrohr (1) strömenden Mediums bestimmt wird, indem die erfaßten Schwingungen des Meßrohrs (1) auf der Grundlage eines physikalisch-mathematischen Modells für die Dynamik des Massendurchflußmeßgeräts ausgewertet werden, wobei das physikalisch-mathematische Modell für jede angeregte Eigenform eine Übertragungsfunktion umfasst,
**dadurch gekennzeichnet,**
**dass** um die effektiv schwingende Masse unabhängig von der wirksamen Federkonstanten zu bestimmen und daraus die Dichte des strömenden Mediums zu ermitteln, das Coriolis-Massendurchflußmeßgerät bei einer oder mehreren Zusatzfrequenzen angeregt und die Übertragungsfunktion gemessen wird und hieraus dann die effektiv schwingende Masse und die Steifigkeit bzw. die Federkonstante berechnet wird,

wobei eine Betriebsanregung des Meßrohrs (1) in seiner ersten Eigenform mit einer ersten Frequenz zur Massendurchflußmessung und eine Zusatzanregung des Meßrohrs (1) in seiner ersten Eigenform mit einer von der ersten Frequenz verschiedenen zweiten Frequenz erfolgt, die Resonanzfrequenz des Meßrohrs (1) in seiner ersten Eigenform ermittelt wird und die Bestimmung der Dichte des durch das Meßrohr (1) strömenden Mediums über die effektiv schwingende Masse der ersten Eigenform mittels der Resonanzfrequenz des Meßrohrs (1) in der ersten Eigenform und der erfaßten Schwingungen des Meßrohrs (1) erfolgt, die aus der Zusatzanregung des Meßrohrs (1) resultiert,

oder wobei eine erste Zusatzanregung des Meßrohrs (1) in seiner ersten Eigenform mit einer ersten Frequenz und eine zweite Zusatzanregung des Meßrohrs (1) in seiner ersten Eigenform mit einer von der ersten Frequenz verschiedenen zweiten Frequenz erfolgt und die Bestimmung der Dichte des durch das Meßrohr (1) strömenden Mediums über die effektiv schwingende Masse der ersten Eigenform mit der erfaßten Schwingung des Meßrohrs (1) erfolgt, die aus den beiden Zusatzanregungen des Meßrohrs (1) resultieren,

oder wobei eine erste Zusatzanregung des Meßrohrs (1) in seiner zweiten Eigenform mit einer ersten Frequenz und eine zweite Zusatzanregung des Meßrohrs (1) in seiner zweiten Eigenform mit einer von der ersten Frequenz verschiedenen zweiten Frequenz erfolgt und die Bestimmung der Dichte des durch das Meßrohr (1) strömenden Mediums über die effektiv schwingende Masse der zweiten Eigenform mittels der erfaßten Schwingungen des Meßrohrs (1) erfolgt, die aus den beiden Zusatzanregungen des Meßrohrs (1) resultieren,

wobei bei den zwei Letztgenannten Alternativen optional eine Betriebsanregung des Meßrohrs (1) in seiner ersten Eigenform mit einer von der ersten Frequenz und von der zweiten Frequenz jeweils verschiedenen dritten Frequenz erfolgt und die Ermittlung der Dichte des durch das Meßrohr (1) strömenden Mediums über die Resonanzfrequenz des Meßrohrs (1) in der ersten Eigenform und die aus den Zusatzanregungen bestimmten effektiv wirksamen Federkonstanten erfolgt.

**2.** Verfahren nach Anspruch 1, **dadurch gekennzeichnet, daß** das physikalisch-mathematische Modell zur Beschreibung der Schwingungen des Massendurchflußmeßgeräts bei Anregung des Meßrohrs (1) in seiner ersten Eigenform und/oder in seiner zweiten Eigenform geeignet ist.

**3.** Verfahren nach einem der Ansprüche 1oder 2, **dadurch gekennzeichnet, daß** das physikalisch-mathematische Modell zur Bestimmung der Dichte die Kopplung zwischen der ersten Eigenform und der zweiten Eigenform der Schwingungen des Meßrohrs (1) berücksichtigt.

**4.** Verfahren nach einem der Ansprüche 1 bis 3, **dadurch gekennzeichnet, daß** das physikalisch-mathematische Modell zur Bestimmung der Dichte außer dem Meßrohr (1) auch den Einfluß wenigstens einer weiteren Einrichtung des Massendurchflußmeßgeräts, wie einem Tragrohr (2) oder/und einer Aufhängung des Meßrohrs des Massendurchflußmeßgeräts, berücksichtigt.

**5.** Verfahren nach einem der Ansprüche 1 bis 4, **dadurch gekennzeichnet, daß** über das physikalisch-mathematische Modell die wirksame Federkonstante des Meßrohrs (1) im laufenden Betrieb berücksichtigt wird.

**6.** Verfahren nach einem der Ansprüche 1 bis 5, **dadurch gekennzeichnet, daß** die Temperatur im Massendurchflußmeßgerät erfaßt wird, um die Temperaturabhängigkeit der Funktion von Einrichtungen des Massendurchflußmeßgeräts, wie einem Schwingungserzeuger (4) für das Meßrohr (1) oder/und einem Schwingungssensor (5) für das Meßrohr (1), zu berücksichtigen.

**7.** Verfahren nach einem der Ansprüche 1 bis 6, **dadurch gekennzeichnet, daß** die Temperatur des Meßrohrs (1) erfaßt wird, um eine temperaturabhängige Änderung des Volumens des Meßrohrs (1) bei der Bestimmung der Dichte zu berücksichtigen.

**8.** Verfahren nach einem der Ansprüche 1 bis 7, **dadurch gekennzeichnet, daß** der Druck im Meßrohr (1) bestimmt wird, um eine druckabhängige Änderung des Volumens des Meßrohrs (1) bei der Bestimmung der Dichte zu berücksichtigen.

**Claims**

**1.** Method of operating a mass flow meter which operates according to the Coriolis principle and through which a medium flows, the mass flow meter having a measuring tube (1) through which a medium flows, the measuring tube (1) being excited to oscillations with at least two mutually different frequencies or/and in at least two mutually different natural modes, and the resulting oscillations of the measuring tube (1) being detected, the density of the medium flowing through the measuring tube (1) being determined by evaluating the detected oscillations of the measuring tube (1) on the basis of a physical and mathematical model for the dynamics of the mass flow meter, the physical and mathematical model comprising a transfer function for each excited natural mode,

**characterized**

**in that** in order to determine the effectively oscillating mass independently of the effective spring constant and to determine therefrom the density of the fluid medium, the Coriolis mass flow meter is excited at one or more additional frequencies and the transfer function is measured, and the effectively oscillating mass and the stiffness or the spring constant is then calculated therefrom,

an operating excitation of the measuring tube (1) being performed in its first natural mode with a first frequency for the mass flow measurement and an additional excitation of the measuring tube (1) being performed in its first natural mode with a second frequency, different to the first frequency, the resonant frequency of the measuring tube (1) being determined in its first natural mode and the determination of the density of the medium flowing through the measuring tube (1) being performed via the effectively oscillating mass of the first natural mode by means of the resonant frequency of the measuring tube (1) in the first natural mode and of the detected oscillations of the measuring tube (1), which result from the additional excitation of the measuring tube (1),

or a first additional excitation of the measuring tube (1) being performed in its first natural mode with a first frequency, and a second additional excitation of the measuring tube (1) being performed in its first natural mode with a second frequency, different to the first frequency, and the determination of the density of the medium flowing through the measuring tube (1) being performed via the effectively oscillating mass of the first natural mode with the detected oscillation of the measuring tube (1), which result from the two additional excitations of the measuring tube (1),

or a first additional excitation of the measuring tube (1) being performed in its second natural mode with a first frequency, and a second additional excitation of the measuring tube (1) being performed in its second natural mode with a second frequency, different to the first frequency, and the determination of the density of the medium flowing through the measuring tube (1) being performed via the effectively oscillating mass of the second natural mode by means of the detected oscillations of the measuring tube (1) which result from the two additional excitations of the measuring tube (1),

and, in the case of the two last-mentioned alternatives, an operating excitation of the measuring tube (1) being optionally performed in its first natural mode with a third frequency, respectively different to the first frequency and to the second frequency, and the determination of the density of the medium flowing through the measuring tube (1) being undertaken via the resonant frequency of the measuring tube (1) in the first natural mode and via the effective spring constants determined from the additional excitations.

2. Method according to Claim 1, **characterized in that** the physical and mathematical model is suitable for describing the oscillations of the mass flow meter for the excitation of the measuring tube (1) in its first natural mode and/or in its second natural mode.

3. Method according to either of Claims 1 and 2, **characterized in that** in order to determine the density the physical and mathematical model takes account of the coupling between the first natural mode and the second natural mode of the oscillations of the measuring tube (1).

4. Method according to one of Claims 1 to 3, **characterized in that** in order to determine the density, apart from the measuring tube (1), the physical and mathematical model also takes account of the influence of at least one further device of the mass flow meter, such as a support tube (2) or/and a suspension of the measuring tube of the mass flow meter.

5. Method according to one of Claims 1 to 4, **characterized in that** the effective spring constant of the measuring tube (1) in continuous operation is taken into account via the physical and mathematical model.

6. Method according to one of Claims 1 to 5, **characterized in that** the temperature in the mass flow meter is detected in order to take account of temperature dependence of the functioning of devices of the mass flow meter, such as an oscillation generator (4) for the measuring tube (1) or/and an oscillation sensor (5) for the measuring tube (1).

7. Method according to one of Claims 1 to 6, **characterized in that** the temperature of the measuring tube (1) is detected in order to take account of a temperature-dependent change in the volume of the measuring tube (1) during the determination of the density.

8. Method according to one of Claims 1 to 7, **characterized in that** the pressure in the measuring tube (1) is determined in order to take account of a pressure-dependent change in the volume of the measuring tube (1) during the determination of the density.

## Revendications

1. Procédé d'utilisation d'un appareil de mesure de débit massique qui travaille selon le principe des forces de Coriolis et dans lequel circule un fluide,
   l'appareil de mesure de débit massique présentant un tube de mesure (1) dans lequel circule un fluide,
   le tube de mesure (1) étant excité à vibrer à au moins deux fréquences différentes l'une de l'autre et/ou en au moins deux formes propres différentes l'une de l'autre,
   les vibrations qui en résultent pour le tube de mesure (1) étant saisies,
   la densité du fluide qui circule dans le tube de mesure (1) étant déterminée en évaluant les vibrations saisies sur le tube de mesure (1) sur la base d'un modèle physicomathématique de la dynamique de l'appareil de mesure de débit massique,
   le modèle physicomathématique comportant une fonction de transfert pour chaque forme propre excitée, **caractérisé en ce que**
   pour déterminer la masse effectivement oscillante de manière indépendante des constantes élastiques actives et ainsi déterminer la densité du fluide en écoulement, l'appareil de mesure de débit massique Coriolis est excité à une ou plusieurs fréquences supplémentaires et la fonction de transfert est mesurée pour ainsi calculer la masse effectivement oscillante et la rigidité ou la constante élastique,
   **en ce qu'**une excitation de fonctionnement du tube de mesure (1) dans sa première forme propre s'effectue à une première fréquence pour la mesure du débit massique et une excitation supplémentaire du tube de mesure (1) dans sa première forme propre s'effectue à une deuxième fréquence différente de la première fréquence, la fréquence de résonance du tube de mesure (1) dans sa première forme propre étant déterminée et la détermination de la densité du fluide qui circule dans le tube de mesure (1) s'effectuant par l'intermédiaire de la masse effectivement oscillante de la première forme propre au moyen de la fréquence de résonance du tube de mesure (1) dans la première forme propre et des vibrations saisies sur le tube de mesure (1) et qui résultent de l'excitation supplémentaire du tube de mesure (1),
   ou **en ce qu'**une première excitation supplémentaire du tube de mesure (1) dans sa première forme propre s'effectue à une première fréquence et une deuxième excitation supplémentaire du tube de mesure (1) dans sa première forme propre s'effectue à une deuxième fréquence différente de la première fréquence et la détermination de la densité du fluide qui circule dans le tube de mesure (1) s'effectue par l'intermédiaire de la masse effectivement oscillante de la première forme et des vibrations saisies sur le tube de mesure (1) et qui résultent des deux excitations supplémentaires du tube de mesure (1),
   ou **en ce qu'**une première excitation supplémentaire du tube de mesure (1) dans sa première forme propre s'effectue à une première fréquence et une deuxième excitation supplémentaire du tube de mesure (1) dans sa première forme propre s'effectue à une deuxième fréquence différente de la première fréquence et la détermination de la densité du fluide qui circule dans le tube de mesure (1) s'effectue par l'intermédiaire de la masse effectivement oscillante de la deuxième forme propre au moyen des vibrations saisies sur le tube de mesure (1) et qui résultent des deux excitations supplémentaires du tube de mesure (1),
   et **en ce que** dans les deux variantes citées en dernier lieu, une excitation en fonctionnement du tube de mesure (1) dans sa première forme propre s'effectue facultativement à une troisième fréquence différente de la première fréquence et différente de la deuxième fréquence et la détermination de la densité du fluide qui circule dans le tube de mesure (1) s'effectue par l'intermédiaire de la fréquence de résonance du tube de mesure (1) dans la première forme propre et de la constante élastique effectivement active déterminée à partir des excitations supplémentaires.

2. Procédé selon la revendication 1, **caractérisé en ce que** le modèle physicomathématique convient pour décrire les vibrations de l'appareil de mesure de débit massique lorsque le tube de mesure (1) est excité dans sa première forme propre et/ou dans sa deuxième forme propre.

3. Procédé selon l'une des revendications 1 ou 2, **caractérisé en ce que** pour déterminer la densité, le modèle physicomathématique tient compte du couplage entre la première forme propre et la deuxième forme propre des vibrations du tube de mesure (1).

4. Procédé selon l'une des revendications 1 à 3, **caractérisé en ce que** pour déterminer la densité, le modèle physicomathématique tient compte, en plus du tube de mesure (1), de l'influence d'au moins un autre dispositif de l'appareil de mesure de débit massique, par exemple un tube de support (2) et/ou la suspension du tube de mesure de l'appareil de mesure de débit massique.

5. Procédé selon l'une des revendications 1 à 4, **caractérisé en ce que** la constante élastique active du tube de mesure (1) en fonctionnement permanent est prise en compte par l'intermédiaire du modèle physicomathématique.

6. Procédé selon l'une des revendications 1 à 5, **caractérisé en ce que** la température de l'appareil de mesure de débit massique est saisie pour tenir compte de la dépendance vis-à-vis de la température du fonctionnement de dispositifs de l'appareil de mesure de débit massique, par exemple un générateur de vibrations (4) du tube de mesure (1) et/ou une sonde de vibrations (5) du tube de mesure (1).

7. Procédé selon l'une des revendications 1 à 6, **caractérisé en ce que** lors de la détermination de la densité, la température du tube de mesure (1) est saisie pour tenir compte d'une variation en fonction de la température du volume du tube de mesure (1).

8. Procédé selon l'une des revendications 1 à 7, **caractérisé en ce que** lors de la détermination de la densité, la pression qui règne dans le tube de mesure (1) est déterminée pour tenir compte d'une modification en fonction de la pression du volume du tube de mesure (1).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10002635 A1
- WO 0071979 A1
- US 5576500 A
- DE 4200060 A1
- DE 10002635